Europäisches Patentamt

European Patent Office

Office européen des brevets

(19)

(11) Veröffentlichungsnummer: **0 277 490 B1**

# (12) EUROPÄISCHE PATENTSCHRIFT

(45) Veröffentlichungstag der Patentschrift: **02.09.92**

(21) Anmeldenummer: **88100275.2**

(22) Anmeldetag: **12.01.88**

(51) Int. Cl.5: **F02D 41/38**, F02D 1/06, F02M 41/12, F02M 59/44

(54) **Kraftstoffeinspritzpumpe.**

(30) Priorität: **03.02.87 DE 3703073**

(43) Veröffentlichungstag der Anmeldung:
**10.08.88 Patentblatt 88/32**

(45) Bekanntmachung des Hinweises auf die
Patenterteilung:
**02.09.92 Patentblatt 92/36**

(84) Benannte Vertragsstaaten:
**DE FR GB IT**

(56) Entgegenhaltungen:
EP-A- 0 018 351       DE-A- 3 026 802
DE-A- 3 237 499       DE-A- 3 243 349
GB-A- 1 510 436       GB-A- 2 127 901

PATENT ABSTRACTS OF JAPAN, Band 9, Nr.
3 (M-349)[1726], 9. Januar 1985; & JP-A-59 155
534

SAE-paper 860145

(73) Patentinhaber: **ROBERT BOSCH GMBH
Postfach 30 02 20
W-7000 Stuttgart 30(DE)**

(72) Erfinder: **Braun, Wolfgang, Dipl.-Ing. (FH)
Haldenrainstrasse 12
W-7257 Ditzingen(DE)**
Erfinder: **Emsmann, Wulf, Dipl.-Ing.
Akazienweg 7
W-7016 Gerlingen(DE)**
Erfinder: **Konrath, Karl
Vogelsangstrasse 45
W-7149 Freiberg(DE)**
Erfinder: **Krieger, Klaus, Dipl.-Ing.
Zentralplatz 4
W-7151 Affalterbach(DE)**
Erfinder: **Nothdurft, Heinz
Steinenbronnerstrasse 26
W-7000 Stuttgart 70(DE)**

## Beschreibung

Stand der Technik

Die Erfindung geht aus von einer Kraftstoffeinspritzpumpe, wie sie durch die SAE-Paper 860145 bekannt ist. Bei einer solchen Kraftstoffeinspritzpumpe ist zur Kraftstoffmengensteuerung ein Magnetventil vorgesehen, durch das während der Saugphasen des Pumpenkolbens der Kraftstoffeinspritzpumpe die in der folgenden Förderphase einzuspritzende Kraftstoffmenge zugemessen wird. Die bekannte Kraftstoffeinspritzpumpe weist ein Steuergerät auf, das zumindest zum Teil in einem mit der Kraftstoffeinspritzpumpe verbundenen Gehäuse untergebracht ist. Dieses Gehäuse weist eine Kühlkammer auf, die vom Kraftstoff durchflossen ist, und zwar liegt die Kühlkammer im Kraftstoffzulauf zur Kraftstoffeinspritzpumpe. Die Kühlkammer kühlt sowohl den Schaltungsteil als auch den Leistungsteil des Steuergeräts zur Ansteuerung des schnellen Magnetventils. Bei dieser bekannten Einspritzpumpe wird also lediglich ein Zumeßmagnetventil vom Steuergerät angesteuert und es erfolgt die Kraftstoffmengenregelung allein über dieses Zumeßventil. Die bekannte Kraftstoffeinspritzpumpe ist nicht für den Betrieb von aufgeladenden Brennkraftmaschinen vorgesehen.

Es ist weiterhin aus der DE-OS 32 43 349 eine Kraftstoffeinspritzpumpe bekannt, die mit einem mechanischen Regler zur Steuerung der Kraftstoffeinspritzmenge versehen ist und zudem einen Vollastanschlag aufweist, durch den die maximale Kraftstoffeinspritzmengenstellung des Reglers begrenzt wird. Der Vollastanschlag ist durch einen Schrittmotor verstellbar, der am Pumpengehäuse montiert ist und der einen Zwischenhebel verstellt, der um eine gehäusefeste Drehachse schwenkbar ist. Der Zwischenhebel kann sich zwischen einem Nullungsanschlag und der Spindel des Schrittmotors verstellen. Als Schrittmotor werden dabei sowohl Linear- als auch Drehschrittmotoren vorgeschlagen. Bei dieser bekannten Anordnung ist jedoch das Steuergerät zur Ansteuerung des Schrittmotors von der Kraftstoffeinspritzpumpe entfernt untergebracht und mit dem Schrittmotor über eine Zuleitung verbunden. Dies hat den Nachteil, das für die Kühlung des Steuergeräts eine separate Kühlung vorgesehen werden muß und eine gesonderte Anbringung und Montage des Steuergeräts beim Einbau der Kraftstoffeinspritzpumpe vorgesehen werden muß.

Eine in gleicher Weise, wie vorstehend dargelegt, ausgebildete Kraftstoffeinspritzpumpe mit einem von der Kraftstoffeinspritzpumpe entfernt untergebrachten Steuergerät zur Ansteuerung eines Schrittmotors ist auch durch die DE-A-32 37 499 bekannt. Hier gilt das zuvor Gesagte.

Durch die JP-A-59 15 5534 ist eine Kraftstoffeinspritzpumpe bekannt, bei der ebenfalls durch einen Schrittmotor ein Vollastanschlag verstellt wird. Hier ist das den Schrittmotor steuernde Steuergerät mit dem Schrittmotor zusammen in einem gemeinsamen Gehäuse untergebracht. Eine Kühlung des Steuergeräts ist nicht vorgesehen.

Durch die EP-A-00 18 351 ist es bekannt, bei einem Steuergerät zur Verstellung eines Vollastanschlages einer Kraftstoffeinspritzpumpe den Ladedruck zu berücksichtigen. Dabei werden Druckgeber verschiedener Bauart verwendet, deren Ausgänge über eine Signalleitung mit dem Steuergerät verbunden sind. Diese Ausgestaltung berücksichtigt weder die Wärmeentwicklung im Steuergerät noch eine geeignete Unterbringung des Steuergeräts.

Durch die GB-A-2 127 901 schließlich ist eine Kraftstoffeinspritzpumpe bekannt, durch die in ähnlicher Weise wie beim eingangs genannten Stand der Technik die Unterbringung des Steuergerätes in einem Gehäuse, das gekühlt ist, berücksichtigt ist. In diesem bekannten Falle ist das Steuergerät in einem mit dem Getriebe der zugehörigen Brennkraftmaschine verbundenen Gehäuse angeordnet, das eine von Kraftstoff durchflossene Kühlkammer aufweist. Diese bekannte Ausgestaltung weist auch einen Drucksensor auf, der den Druck in der Kraftstoffleitung stromaufwärts eines Zumeßventils mißt. Dabei ist der Drucksensor außerhalb des Gehäuses des Steuergeräts mit der Kraftstoffleitung verbunden und der Signalausgang des Drucksensors über eine Signalleitung und eine Steckverbindung mit dem Steuergerät im Innern des gekühlten Gehäuses verbindbar. Auch diese Anordnung hat den Nachteil, daß für die Kühlung des Steuergeräts eine separate Einrichtung vorgesehen werden muß und Steuergerät und Einspritzpumpe sowie Geber voneinander entfernt angeordnet sind und so ein hoher Aufwand zur Herstellung und Montage betrieben werden muß. Eine Steuerung in Abhängigkeit vom Ladedruck ist auch bei dieser bekannten Ausgestaltung nicht vorgesehen.

Vorteile der Erfindung

Die erfindungsgemäße Kraftstoffeinspritzpumpe mit den kennzeichnenden Merkmalen des Hauptanspruchs hat demgegenüber den Vorteil, daß die Kraftstoffeinspritzpumpe für die Verwendung bei mit Aufladung betriebener Brennkraftmaschinen geeignet ist und eine kompakte Einheit mit dem Steuergerät bildet. Vorteilhaft wird dieses direkt durch den der Kraftstoffeinspritzpumpe zufließenden Kraftstoff gekühlt. Für die Montage ist lediglich eine Spannungsversorgung nötig, alle anderen Parameter für eine ladedruck- und drehzahlabhängige Steuerung der maximalen Kraftstoffeinspritzmenge der Kraftstoffeinspritzpumpe können an der Pumpe mit den dort vorgesehenen Fühlern selbst abgenommen werden.

Weitere vorteilhafte Ausgestaltungen der Erfindung sind den Unteransprüchen zu entnehmen.

Zeichnung

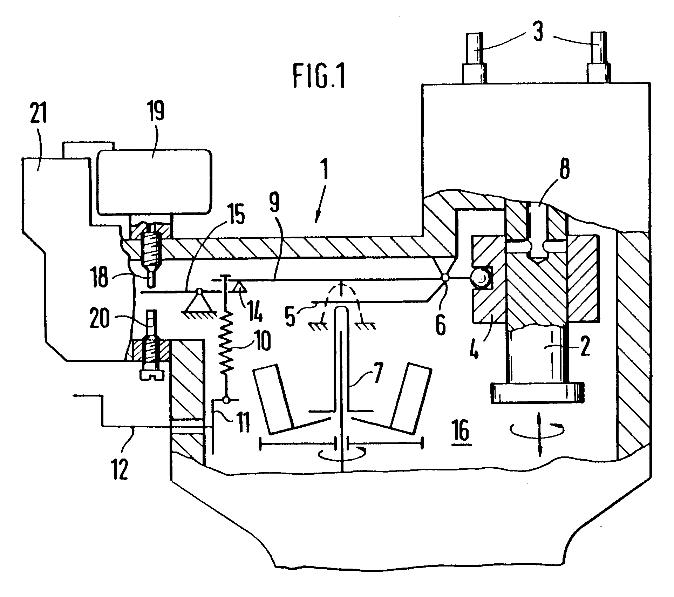

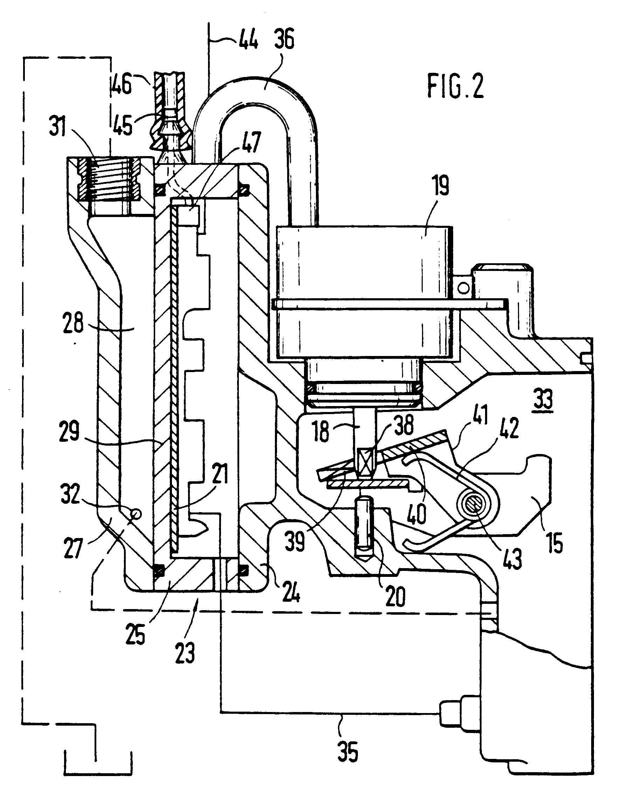

Ein Ausführungsbeispiel der Erfindung ist in der Zeichnung dargestellt und wird in der nachfolgenden Beschreibung näher erläutert. Es zeigen Figur 1 das Ausführungsbeispiel anhand einer grob schematisch im Schnitt dargestellen Kraftstoffeinspritzpumpe, Figur 2 einen Teilschnitt durch die Kraftstoffeinspritzpumpe nach Figur 1 im Bereich des das Steuergerät beherbergenden Gehäuse.

Beschreibung

In Figur 1 wird eine Kraftstoffeinspritzpumpe 1 der Verteilerpumpenbauart gezeigt. Solche Kraftstoffeinspritzpumpen weisen zum Beispiel einen hin- und hergehenden und zugleich rotierenden Pumpenkolben 2 auf, der bei seiner Drehung über eine nicht gezeigte Verteileröffnung verschiedene Kraftstoffauslässe 3 bei einem Pumpenkolbenförderhub zur Versorgung von Kraftstoffeinspritzstellen der zugehörigen Brennkraftmaschine ansteuert. Die Kraftstoffeinspritzmenge wird dabei in bekannter Weise durch einen als Mengenverstellorgan dienenden Ringschieber 4 gesteuert, dessen Oberkante einen Entlastungskanal 8 des nicht gezeigten Pumpenarbeitsraumes steuert. Durch Aufsteuern dieses Kanals zu einem kraftstoffgefüllten Saugraum 16 hin, in den der Pumpenkolben mit dem Ringschieber 4 taucht, wird während des Hochdruckförderhubes des Pumpenkolbens in bekannter Weise die Einspritzung von Kraftstoff unterbrochen und damit auch der wirksame Pumpenkolbenförderhub bzw. die Kraftstoffeinspritzmenge bestimmt.

Der Ringschieber 4 ist mit einem zweiarmigen Stellhebel 5 gekoppelt, der um eine gehäusefeste, gegebenenfalls einstellbare Achse 6 schwenkbar ist und an dem am Ende des anderen Armes eine vereinfacht dargestellter Drehzahlgeber 7 angreift. Dieser kann als Fliehkraftgeber ausgestaltet werden, der synchron zur Pumpendrehzahl angetrieben wird und mit drehzahlabhängiger Kraft auf den Stellhebel 5 wirkt. Der Stellhebel ist durch den Drehzahlgeber 7 zur Anlage an einen Schlepphebel 9 bringbar, der als einarmiger Hebel um dieselbe Achse 6 des Stellhebels schwenkbar ist. Am Ende des Schlepphebels ist eine Regelfeder 10 angekoppelt, deren Vorspannung in bekannter Weise durch einen Exzenter 11 veränderbr ist, welcher über einen von außerhalb der Kraftstoffeinspritzpumpe willkürlich verstellbaren Verstellhebel 12 betätigbar ist.

Der Schwenkbereich des Schlepphebels 9 entgegen der Wirkung der Regelfeder 10 ist durch einen verstellbaren Anschlag 14 begrenzbar. Dieser befindet sich am Ende eines Hebelarmes eines zweiarmigen Zwischenhebels 15, der gehäusefest gelagert ist. Am Ende des anderen Hebelarms des Zwischenhebels 15 greift ein Stellorgan 18 in Form einer Linearspindel eines Schrittmotors 19 an, durch den der Anschlag 14 über eine Schwenkbewegung des Zwischenhebels 15 verstellbar ist. Der Verstellbereich des Stellorgans 18 ist durch einen verstellbaren Anschlag 20 begrenzbar, der zum Beispiel als durch die Einspritzpumpengehäusewand eingeschraubte Schraube gebildet wird. Der Schrittmotor 19 wird von einer Steuereinrichtung 21 gesteuert, die entsprechend einem aus Betriebsparametern gebildeten Steuerwert gezielte Stellschritte an den Schrittmotor abgibt. In vorteilhafter Weise wird zur Sicherstellung einer genauen Position des Zwischenhebels 15, einmalig während eines jeden Startvorgangs des Verbrennungsmotors der Zwischenhebel 15 durch das Stellorgan bis zum Anschlag 20 in eine Nullposition gefahren. Vom Anschlag 20 aus wird dann der Zwischenhebel 15 um eine dem Steuerwert des Stellorgans entsprechende Schrittzahl in eine gewünschte Stellung (niedrigste Saugvollast) gebracht. Von dieser Position aus erfolgen dann alle weiteren Stellvorgänge. Durch die Verwendung des Zwischenhebels 15 können dabei die Verstellkräfte, die vom Schrittmotor 19 zur Verstellung des Anschlags 14 entgegen der Kraft der Regelfeder 10 notwendig sind, verringert werden. Als Schrittmotor dient vorzugsweise ein Linearschrittmotor.

In Figur 2 ist die Art der Unterbringung des Steuergerätes 21 näher dargesellt. Das Steuergerät befindet sich dabei in einem Gehäuse 23, das an ein entsprechendes Flanschteil 24 des Pumpengehäuses angeflanscht ist. Es besteht aus einem ersten topfförmigen Teil 25, das mit der offenen Seite zum Flanschteil 24 gewendet einen Schaltungsraum 26 einschließt, der das Steuergerät 21 aufnimmt und einem Deckelteil 27, das dicht auf den äußeren Boden des topfförmigen Teils 25 aufgesetzt ist und mit dem Boden zusammen eine Kühlkammer 28 einschließt. Der Boden des topfförmigen Teils 25 bildet auf diese Weise eine Wärmeübertragungswand 29 über die Wärme, die in dem Steuergerät 21 entsteht, zur Kühlkammer 28 hin abgeführt werden kann. Das Steuergerät weist neben dem reinen Schaltungsteil auch die Leistungsendstufe zum Betrieb des Schrittmotores auf. Die in dieser Endstufe entstehende Wärme wird vorteilhaft zur Kühlkammer 28 abgeleitet. Diese weist einen Kraftstoffeinlaß 31 auf, über den Kraftstoff als Kühlungsmittel zugeführt wird und über einen Auslaß 32 wieder abgeleitet wird. Die Kühlkammer 28 befindet sich dabei vorteilhaft im Kraftstoffzulauf zwischen Kraftstofftank und dem im Innern der Kraftstoffeinspritzpumpe eingeschlossenen Saugraum 33. Zur Verbesserung der thermischen Abkopplung des Steuergerätes von dem eine Wärmequelle bildenden Saugraum 16 wird die Kühlkammer 28 vorteilhafterweise auf der Saugraumseite liegend angeordnet und der Schaltungsraum 26, verschlossen von einem Deckel, außenliegend angeordnet. Diese Version erleichtert vorteilhaft auch den Zugang zum Steuergerät ohne den Kraftstoffkreislauf zu stören.

Das Steuergerät ist über eine Signalleitung 35 mit einem an der Kraftstoffeinspritzpumpe angeordneten elektrischen Drehzahlgeber verbunden, der hier nicht weiter gezeigt ist und zum Beispiel in üblicher Weise als Segmentratgeber ausgebildet sein kann. Über eine Steuerleitung 36 ist der Ausgang des Steuergerätes 21 mit dem Schrittmotor 29 verbunden. Weiterhin ist im Steuergerät ein Ladedruckgeber 47 angeordnet, der über einen Schlauchanschlußstutzen 45 aus dem Schaltungsraum 26 nach außen führt und über einen Schlauch 46 mit der Ladedruckquelle an der Brennkraftmaschine verbunden ist. Der Schlauch läßt sich völlig unproblematisch montieren und steht dem Vorteil der kompakten Lösung Verteilereinspritzpumpe mit integriertem gekühlten Steuergerät nicht entgegen.

Der Schrittmotor weist für eine spezielle Verdrehsicherung am Ende seiner in den Saugraum 3 ragenden Linearspindel 18 eine Abplattung 38 auf, mit der er durch einen entsprechenden Schlitz 39 in einem Hebelarm 40 eines einarmigen Winkelhebels 41 hindurchgreift. Der Winkelhebel 41 verhindert dabei ein Verdrehen der Linearspindel des Stellmotors 19 und ist auf derselben Achse 43 gelagert, auf der auch der Zwischenhebel 15 gelagert ist. Zudem ist der Winkelhebel durch eine Feder 42 gespannt, deren eines Federende sich gehäusefest abstützt und deren anderes Federende am Winkelhebel 41 angreift und diesen vom Anschlag 20 weg bewegt. Dabei kommt der Winkelhebel zur Anlage am Ende der Abplattung 38 und verhindert so ein Herausgleiten aus der Linearspindel 18.

Mit der erfindungsgemäße Ausgestaltung ergibt sich eine kompakte Einheit aus Kraftstoffeinspritzpumpe, Steuerschaltung und Schrittmotor, so daß lediglich eine elektrische Zuleitung 44 der Stromversorgung notwendig ist, um die Steuerschaltung in Betrieb zu nehmen. Für die Montage ergibt sich damit eine wesentliche Erleichterung, indem lediglich wie üblich die Kraftstoffeinspritzpumpe montiert wird. Die Steuerschaltung ist dabei optimal kühlbar durch den aus dem Kraftstofftank zufließenden Kraftstoff.

**Patentansprüche**

1. Kraftstoffeinspritzpumpe für Brennkraftmaschinen mit einem mit der Kraftstoffeinspritzpumpe verbundenen elektrisch gesteuerten Kraftstoffeinspritzmengenverstellorgan (14), das durch ein elektronisches Steuergerät (21) gesteuert wird, das eine Stromversorgungsleitung (44) aufweist, eine Leistungsendstufe zum Antrieb des Mengenverstellorgans enthält und in einem mit dem Gehäuse der Kraftstoffeinspritzpumpe verbundenen Gehäuse (23) angeordnet ist, das eine vom Kraftstoff durchströmte Kühlkammer (28) aufweist, die durch eine Wärmeübertragungswand (29) von einer das Steuergerät aufnehmenden Kammer getrennt ist und das Steuergerät in wärmeleitendem Kontakt mit der Wärmeübertragungswand ist und mit einem Drehzahlgeber, der an der Kraftstoffeinspritzpumpe befestigt ist und zur Übertragung seines Ausgangssignal durch eine Verbindungsleitung (35) mit dem Steuergerät (21) verbunden ist, dadurch gekennzeichnet, daß das Mengenverstellorgan ein Schrittmotor (19) ist, durch den über einen Zwischenhebel (15) ein Vollastanschlag (14) eines mechanischen Reglers der Kraftstoffeinspritzpumpe verstellbar ist und daß das Steuergerät (21) mit einem im Gehäuse (23) des Steuergerätes angeordneten Ladedruckgeber (47) verbunden ist, der über einen Schlauch (46) mit einer Ladedruckquelle verbunden ist.

2. Kraftstoffeinspritzpumpe nach Anspruch 1, dadurch gekennzeichnet, daß der Schrittmotor als Stellorgan eine Linearspindel (18) aufweist, die an ihrem Ende eine Abplattung (38) hat, die in einen Führungsschlitz (39) in einem um die Achse (43) des Zwischenhebels (15) schwenkbaren, von einer Rückstellfeder (42) beaufschlagten Hebel (41) greift und den Schwenkweg des Zwischenhebels (15) von einem gehäusefesten Anschlag (20) begrenzt.

3. Kraftstoffeinspritzpumpe nach Anspruch 2, dadurch gekennzeichnet, daß die Rückstellfeder (42) den Hebel in Anlage am Ende des als Verdrehsicherung der Linearspindel (18) dienenden Führungsschlitzes (39) hält.

4. Kraftstoffeinspritzpumpe nach Anspruch 1, dadurch gekennzeichnet, daß die Kühlkammer (28) des Gehäuses (23) zwischen der das Gehäuse (23) tragenden Wand der Kraftstoffeinspritzpumpe und dem das Steuergerät (21) aufnehmenden Schaltungsraum (26) des Gehäuses (23) liegt.

**Claims**

1. Fuel injection pump for internal combustion engines comprising an electrically controlled fuel injection quantity adjusting element (14) which is connected to the fuel injection pump and which is controlled by an electronic control device (21) which exhibits a power supply line (44), contains a power output stage for driving the quantity adjusting element and is arranged in a housing (23) connected to the housing of the fuel injection pump, which exhibits a cooling chamber (28) through which fuel flows and which is separated by a heat transfer wall (29) from a chamber accommodating the control device and the control device is in heat-conducting contact with the heat transfer wall and is connected to a rotational-speed transmitter which is attached to the fuel injection pump and is connected to the control device (21) by a connecting line (35) for transmitting its output signal, characterized in that the quantity adjusting element is a stepping motor (19) by means of which a full-load stop (14) of a mechanical controller of the fuel injection pump can be adjusted via an intermediate lever (15), and in that the control device (21) is connected to a charging pressure transmitter (47) arranged in the housing (23) of the control device, which is connected via a hose (46) to a charging pressure source.

2. Fuel injection pump according to Claim 1, characterized in that the stepping motor as adjusting element exhibits a linear spindle (18) which has at its end a flattening (38) which engages a guide slot (39) in a lever (41) which is pivotable about the axis (43) of the intermediate lever (15) and is loaded by a restoring spring (42) and which limits the distance of rotation of the intermediate lever (15) from a housing-fixed stop (20).

3. Fuel injection pump according to Claim 2, characterized in that the restoring spring (42) holds the lever resting against the end of the guide slot (39) used as guard against twisting of the linear spindle (18).

4. Fuel injection pump according to Claim 1, characterized in that the cooling chamber (28) of the housing (23) is located between the wall of the fuel injection pump carrying the housing (23) and the circuit space (26) of the housing (23) accommodating the control device (21).

**Revendications**

1. Pompe d'injection de carburant pour moteurs à combustion interne avec un organe de réglage (14) de la quantité du carburant injectée, commandé électriquement et relié à la pompe d'injection de carburant, et qui est commandé par un appareil électronique de commande (21) comportant une liaison d'alimentation en courant (44) et un étage terminal de puissance pour entraîner l'organe de réglage de la quantité de carburant, cet appareil de commande étant disposé dans un carter (23) relié au carter de la pompe d'injection de carburant, et qui comporte une chambre de refroidissement (28) parcourue par le carburant et séparée par une paroi de transfert de chaleur (29) d'une chambre dans laquelle est logé l'appareil de commande, tandis que l'appareil de commande est en contact de conduction thermique avec cette paroi de transfert de chaleur, un indicateur de vitesse de rotation étant prévu qui est fixé sur la pompe d'injection de carburant et qui, pour transmettre son signal de sortie, comporte une liaison (35) avec l'appareil de commande (21), pompe d'injection de carburant caractérisée en ce que l'organe de réglage de la quantité de carburant est un moteur pas à pas (19), grâce auquel une butée de pleine charge (14) d'un régulateur mécanique de la pompe d'injection de carburant, est susceptible d'être réglé par un levier intermédiaire (15), et en ce que l'appareil de commande (21) est relié à un indicateur de pression d'alimentation (47) disposé dans le carter (23) de l'appareil de commande, et qui, par l'intermédiaire d'un tuyau (46) est relié à une source de pression d'alimentation.

2. Pompe d'injection de carburant selon la revendication 1, caractérisée en ce que le moteur pas à pas comporte, comme organe de réglage, une broche linéaire (18) qui comporte à son extrémité un aplatissement (38) qui vient en prise dans une fente de guidage (39) dans un levier (41), susceptible de pivoter sur l'axe (43) du levier intermédiaire (15) et sollicité par un ressort de rappel (42), et cette broche (18) limite la course de pivotement du levier intermédiaire (15) à partir d'une butée (20) solidaire du carter.

3. Pompe d'injection de carburant selon la revendication 2, caractérisée en ce que le ressort de rappel (42) maintient le levier en application contre l'extrémité de la fente de guidage (39) servant à bloquer en rotation la broche linéaire (18).

4. Pompe d'injection de carburant selon la revendication 1, caractérisée en ce que la chambre de refroidissement (28) du carter (23) est placée entre la paroi, portant le carter (23), de la pompe d'injection de carburant et la chambre de branchement (26) du carter (23) dans laquelle est logé l'appareil de commande (21).

FIG.1

EP 0 277 490 B1

FIG.2